# EUROPÄISCHE PATENTANMELDUNG

(11) **EP 4 650 211 A1**
(43) Veröffentlichungstag der Anmeldung: **19.11.2025**
(21) Anmeldenummer: 25175874.4
(22) Anmeldetag: 12.05.2025
(51) Int. Cl.: B60L 15/02, B60L 58/25, B60L 58/27, H01M 10/615, H02J 7/00

(54) **VERFAHREN UND ANORDNUNG ZUM HEIZEN EINER FAHRZEUGBATTERIE EINES KRAFTFAHRZEUGS**

(30) Priorität: 15.05.2024 DE 102024204480
(71) Anmelder: VOLKSWAGEN AG, 38440 Wolfsburg (DE)
(72) Erfinder: Henkenius, Dr. Carsten, 38440 Wolfsburg (DE); Meyer, Dr. Michael, 38440 Wolfsburg (DE)

(57) **Zusammenfassung**

Die Erfindung betrifft ein Verfahren und eine Anordnung (1) zum Heizen einer Fahrzeugbatterie (51) eines Kraftfahrzeugs (50), wobei die Anordnung (1) einen Pulswechselrichter (2) mit einer Steuereinrichtung (3) aufweist, wobei der Pulswechselrichter (2) mit der Fahrzeugbatterie (51 und der Elektromaschine (52) verbunden ist, wobei der Steuereinrichtung (3) ein Drehmoment (T) und eine Drehzahl (n) der Elektromaschine (52) vorgegeben werden, wobei die Steuereinrichtung (3) derart ausgebildet ist, die Fahrzeugbatterie (51) während des Fahrbetriebs mittels eines Zusatzstromes zu heizen, ohne dass sich das Drehmoment (T) verändert, wobei die Steuereinrichtung (3) derart ausgebildet ist, dass der Drehzahl (n) mittels einer Zuordnungsvorschrift (4) ein magnetischer Fluss (ψ) zugeordnet wird, wobei dem magnetischen Fluss (ψ) und dem Drehmoment (T) durch Zuordnungsvorschriften (5, 6) ein Strom (i) und ein Phasenwinkel (φ) zugeordnet werden, der durch den Pulswechselrichter (2) eingestellt wird, wobei dem magnetischen Fluss (ψ) ein periodischer Zusatzfluss (ψ_{z}) aufgeprägt wird.

## Beschreibung

Die Erfindung betrifft ein Verfahren und eine Anordnung zum Heizen einer Fahrzeugbatterie eines Kraftfahrzeugs.

Batteriezellen von Fahrzeugbatterien haben bei niedrigen Temperaturen des internen Aktivmaterials eine stark eingeschränkte Entlade- und Ladeleistung. Dementsprechend ist die Fahr- und Ladeleistung von Elektrofahrzeugen sehr niedrig, wenn die Fahrzeugbatterie, insbesondere die Hochvoltbatterie, beispielsweise nach langer Standzeit ausgekühlt ist. Außen angeordnete Heizelemente oder Heizvorrichtungen können zwar Abhilfe schaffen, erwärmen jedoch zunächst nur das Batterie- bzw. Zellgehäuse. Eine Temperatur des innenliegenden Aktivmaterials der Zellen beginnt hingegen nur zeitverzögert nach Erwärmung des Batterie- und Zellengehäuses anzusteigen. Das Heizen ist darüber hinaus aufgrund der Wärmeverluste bei der Erwärmung des Zellgehäuses nur ineffektiv, sodass sich insgesamt eine nicht ausreichende Heizwirkung ergibt.

Aus der DE 10 2019 117 944 A1 sind ein Verfahren und eine Vorrichtung zum Laden einer Fahrzeug-Batterie bekannt, wobei ein Steuergerät ausgebildet ist, einen Ladevorgang der Fahrzeug-Batterie zu beeinflussen, wobei die Vorrichtung eine Schalteinrichtung umfasst, und wobei die Schalteinrichtung ausgebildet ist, in Erwiderung auf eine Betätigung der Schalteinrichtung, insbesondere durch einen Benutzer, ein Signal an das Steuergerät zu übertragen, wobei das Steuergerät ausgebildet ist, die Fahrzeug-Batterie vor dem Ladevorgang in Erwiderung auf den Empfang des Signals abhängig von wenigstens einem Soll-Zustand für den Ladevorgang zu beeinflussen.

Aus der DE 10 2018 208 358 A1 sind ein elektrisches Bordnetz, ein Fortbewegungsmittel sowie eine elektrische Schaltung bekannt. Die elektrische Schaltung umfasst eine Eingangsklemme für eine Batterie mit einem Innenwiderstand und einer Induktivität, eine mit ihrem ersten Anschluss an die Eingangsklemme angeschlossene Kapazität, welche mit ihrem zweiten Anschluss an eine elektrische Masse angeschlossen ist, einen mit seinem ersten Anschluss an die Eingangsklemme angeschlossenen ersten Schalter, welcher mit seinem zweiten Anschluss an die elektrische Masse angeschlossen ist, und eine Auswerteeinheit, welche eingerichtet ist, im Ansprechen auf einen Bedarf zum Heizen der Batterie den ersten Schalter zu schließen, sodass ein Stromfluss durch die Induktivität Energie in der Induktivität speichert und anschließend den ersten Schalter zu öffnen, sodass die Energie einen Stromfluss in die Kapazität verursacht, und anschließend die sich über der Kapazität einstellende Spannung einen Stromfluss zurück in die Batterie verursacht. Die Batterie wird also durch thermische Verluste an einem Innenwiderstand der Batterie geheizt.

Aus der DE 10 2022 207 314 A1 ist ein gattungsgemäßes Verfahren bekannt. Der Zusatzstrom soll dabei insbesondere derart ausgestaltet sein und derart aufgeprägt sein, dass ein Antrieb des Fahrzeugs hierdurch nicht beeinträchtigt wird, d.h. der Zusatzstrom führt insbesondere zu keiner Drehzahländerung einer mit dem Antriebsstrom gespeisten elektrischen Maschine und auch zu keinem zusätzlichen Drehmoment, sondern wird insbesondere in Wärme umgewandelt. Dabei ist ausgeführt, dass der Zusatzstrom durch Aufprägen mindestens einer Oberwelle erzeugt wird.

Der Erfindung liegt das technische Problem zugrunde, ein gattungsgemäßes Verfahren derart zu verbessern, dass es sich sehr einfach in eine vorhandene Steuerung eines Pulswechselrichters integrieren lässt. Ein weiteres technisches Problem ist die Schaffung einer entsprechenden Anordnung.

Die Lösung des technischen Problems ergibt sich durch ein Verfahren mit den Merkmalen des Anspruchs 1 sowie eine Anordnung mit den Merkmalen des Anspruchs 7. Weitere vorteilhafte Ausgestaltungen der Erfindung ergeben sich aus den Unteransprüchen.

Bei dem Verfahren zum Heizen einer Fahrzeugbatterie eines Kraftfahrzeugs wird während einer Fahrt des Kraftfahrzeugs einem von einem Pulswechselrichter bereitgestellten Antriebsstrom durch Ansteuern des Pulswechselrichters ein Zusatzstrom derart aufgeprägt, dass ein Entladestrom aus der Fahrzeugbatterie erhöht wird. Dabei wird ein Drehmoment einer Elektromaschine nicht verändert. Dabei wird der Drehzahl mittels einer Zuordnungsvorschrift ein magnetischer Fluss zugeordnet, wobei dem magnetischen Fluss und dem Drehmoment durch Zuordnungsvorschriften ein Strom und ein Phasenwinkel zugeordnet werden, die durch den Pulswechselrichter eingestellt werden. Dabei wird dem magnetischen Fluss ein periodischer Zusatzfluss aufgeprägt. Anschaulich pulsiert der Stromvektor auf einer Isolinie des Drehmoments, sodass eine hohe Heizleistung am Innenwiderstand der Fahrzeugbatterie erzeugt wird. Der Strom und der Phasenwinkel stellen dabei die Zeigerdarstellung einer dq-Stromregelung dar. Das Pulsieren des Stromes ist dabei erheblich effektiver als eine konstante Stromerhöhung, da dort die Verlustwärme primär in der Elektromaschine entsteht. Die Elektromaschine kann prinzipiell eine Asynchronmaschine, eine permanenterregte Synchronmaschine oder eine fremderregte Synchronmaschine sein.

Vorzugsweise ist dabei der periodische Zusatzfluss mittelwertfrei, sodass der Zusatzfluss im Mittel keine Auswirkungen auf die Drehzahl hat.

In einer weiteren Ausführungsform weist der Zusatzfluss eine Dreieckfunktion auf.

In einer alternativen Ausführungsform weist der Zusatzfluss mindestens eine Sinusfunktion auf. Dabei können auch verschiedene Sinusfunktionen überlagert werden. Der Vorteil der Sinusfunktion ist, dass diese keine Sprünge im Gradienten aufweisen. Allerdings lasst sich eine Dreiecksfunktion softwaretechnisch sehr einfach implementieren.

In einer weiteren Ausführungsform ist ein maximaler Strom für die Elektromaschine vorgegeben, wobei der durch die Zuordnungsvorschrift ermittelte Strom aus dem Drehmoment und dem magnetischen Fluss auf den maximalen Strom begrenzt ist. Hierdurch wird verhindert, dass durch den Heizbetrieb die Elektromaschine zu stark thermisch belastet wird. Der maximale Strom kann dabei z.B. empirisch vorab bestimmt werden.

In einer weiteren Ausführungsform ist die Frequenz des periodischen Zusatzflusses größer 500 Hz. Aufgrund dieser hohen Frequenz in Verbindung mit der Mittelwertfreiheit des Zusatzflusses hat der Zusatzfluss keinen Einfluss auf die Drehzahl, da diese aufgrund der Trägheit der Elektromaschine nicht so schnell auf den magnetischen Fluss reagieren kann. Weiter vorzugsweise ist die Frequenz des Zusatzflusses größer/gleich 1 kHz.

Hinsichtlich der Ausgestaltung der Anordnung wird vollinhaltlich auf die vorangegangenen Ausführungen des Verfahrens Bezug genommen.

Die Erfindung wird nachfolgend anhand eines bevorzugten Ausführungsbeispiels näher erläutert. Die Figuren zeigen:
- Fig. 1: eine schematische Darstellung einer Anordnung zum Heizen einer Fahrzeugbatterie eines Kraftfahrzeugs und
- Fig. 2: eine kombinierte Darstellung normierter Iso-Drehmoment- und Flusskennlinien einer Elektromaschine mit einer Steuerung zur Ermittlung des Stromes und des Phasenwinkels.

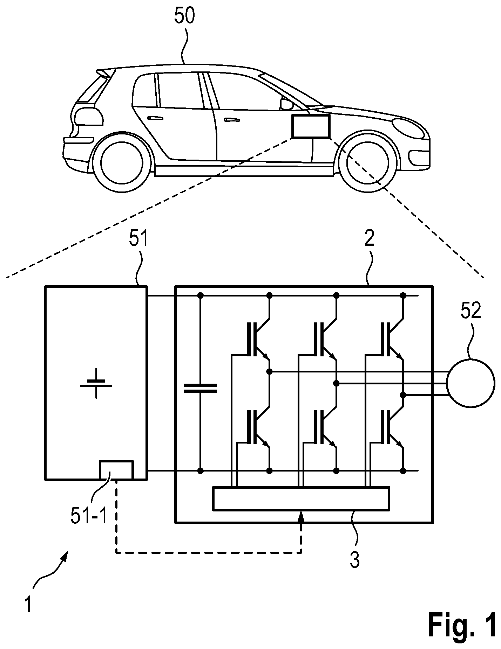

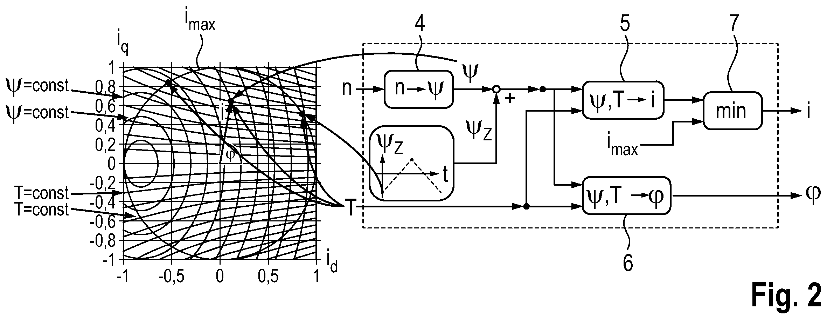

In der Fig. 1 ist schematisch eine Anordnung 1 zum Heizen einer Fahrzeugbatterie 51 eines Kraftfahrzeugs 50 dargestellt, um die Fahrzeugbatterie 51 auch im Fahrbetrieb heizen zu können. Die Anordnung 1 weist hierzu einen Pulswechselrichter 2 und eine Steuereinrichtung 3 zum Ansteuern des Pulswechselrichters 2 auf. Weiter ist eine Elektromaschine 52 dargestellt, die mit dem Pulswechselrichter 2 verbunden ist. Der Fahrzeugbatterie 51 ist mindestens ein Temperatursensor 51-1 zugeordnet, wobei der Steuereinrichtung 3 entweder die Temperatur der Fahrzeugbatterie 51 übermittelt wird ober aber ein Signal, dass die Temperatur der Fahrzeugbatterie 51 unter einem Schwellwert ist. Im Fahrzeugstillstand kann die Fahrzeugbatterie 51 beispielsweise wie in der DE 10 2022 207 314 A1 beschrieben vorgeheizt werden, wobei das nachfolgende Heizen während des Fahrbetriebes nun anhand von Fig. 2 näher erläutert wird.

Dabei sind links normierte Iso-Drehmoment- und Flusskennlinien dargestellt, wobei der eingezeichnete Kreis den maximalen Strom iₘₐₓ der Elektromaschine 52 darstellt. Dabei ist der Querstrom i_{q} über dem Längsstrom i_{d} dargestellt. Von einem nicht dargestellten Motorsteuergerät erhält die Steuereinrichtung 3 als Vorgabe eine Drehzahl n und ein Drehmoment T bzw. Antriebsmoment.

Mittels einer Zuordnungsvorschrift 4 wird dabei die Drehzahl n in einen magnetischen Fluss ψ transformiert. Die Zuordnungsvorschrift 4 kann dabei eine Look-up-Tabelle sein oder aber eine analytische Zuordnung (Formel sein). Mittels weiterer Zuordnungsvorschriften 5, 6 wird dann aus dem magnetischen Fluss ψ und dem Drehmoment T ein Strom i und ein Phasenwinkel φ bestimmt. Die Zuordnungsvorschriften 5, 6 können ebenfalls Look-up-Tabellen sein oder analytische Zuordnungen. Auch kann eine der Zuordnungsvorschriften 5, 6 eine analytische Zuordnungsvorschrift sein und die andere ist als Look-up-Tabelle ausgebildet. Der Strom i geht dann noch durch einen Begrenzer 7, sodass sichergestellt ist, dass der Strom i auf dem Maximalstrom iₘₐₓ begrenzt ist. Der Strom i und der Phasenwinkel φ stellen dabei die Zeigerdarstellung vom Längsstrom i_{d} und dem Querstrom i_{q} dar, die dann nach einer bekannten Transformation in die drei Stromverläufe für die drei Phasen der Elektromaschine 52 transformiert werden können. Ohne Heizfunktion würde dabei beispielsweise ein Strom i und ein Phasenwinkel φ eingestellt werden, so wie dies links in den normierten Iso-Drehmoment- und Flusskennlinien eingezeichnet ist. Erfindungsgemäß wird nun ein periodischer Zusatzfluss ψ_{Z} auf den magnetischen Fluss ψ aufgrund der Drehzahl n addiert. Der Zusatzfluss ψ_{Z} ist mittelwertfrei, d.h. das Integral ist null. Die Frequenz des Zusatzflusses ψ_{Z} ist vorzugsweise größer/gleich 1 kHz. Aufgrund des Zusatzflusses ψ_{Z} läuft der Stromvektor i von der eingezeichneten Position auf eine Iso-Kennlinie des Drehmomentes T nach rechts bis zum maximalen Strom iₘₐₓ und dann wieder zurück nach links, bis wieder der maximale Strom iₘₐₓ erreicht wird. Die beiden Umkehrpunkte sind auf dem Kreis von iₘₐₓ eingezeichnet. Hierdurch wird ein pulsierender Strom erzeugt, der über den Innenwiderstand der Fahrzeugbatterie 51 fließt und diese aufgrund der Verlustwärme erwärmt, ohne das Drehmoment T zu verändern. Da der Zusatzfluss ψ_{Z} mittelwertfrei ist und die Frequenz des Zusatzflusses ψ_{Z} erheblich größer ist als die Trägheit der Elektromaschine 52 ist, bleibt auch die Drehzahl n konstant.

### Bezugszeichenliste

- 1: Anordnung
- 2: Pulswechselrichter
- 3: Steuereinrichtung
- 4: Zuordnungsvorschrift
- 5: Zuordnungsvorschrift
- 6: Zuordnungsvorschrift
- 7: Begrenzer
- 50: Kraftfahrzeug
- 51: Fahrzeugbatterie
- 51-1: Temperatursensor#
- 52: Elektromaschine
- i: Strom
- iₘₐₓ: Maximalstrom
- i_{d}: Längsstrom
- i_{q}: Querstrom
- n: Drehzahl
- T: Drehmoment
- φ: Phasenwinkel
- ψ: magnetischer Fluss
- ψ_{Z}: Zusatzfluss

## Patentansprüche

1. Verfahren zum Heizen einer Fahrzeugbatterie (51) eines Kraftfahrzeugs (50), wobei während einer Fahrt das Kraftfahrzeug (50) einen von einem Pulswechselrichter (2) bereitgestellten Antriebsstrom durch Ansteuern des Pulswechselrichters (2) ein Zusatzstrom derart aufgeprägt wird, dass ein Entladestrom aus der Fahrzeugbatterie (51) erhöht wird, wobei ein Drehmoment (T) einer Elektromaschine (52) durch den Zusatzstrom nicht verändert wird,
**dadurch gekennzeichnet, dass**
einer Drehzahl (n) der Elektromaschine (52) mittels einer Zuordnungsvorschrift (4) ein magnetischer Fluss (ψ) zugeordnet wird, wobei dem magnetischen Fluss (ψ) und dem Drehmoment (T) durch Zuordnungsvorschriften (5, 6) ein Strom (i) und ein Phasenwinkel (φ) zugeordnet werden, die durch den Pulswechselrichter (2) eingestellt werden, wobei dem magnetischen Fluss (ψ) ein periodischer Zusatzfluss (ψ_{Z}) aufgeprägt wird.

2. Verfahren nach Anspruch 1, **dadurch gekennzeichnet, dass** der periodische Zusatzfluss (ψ_{Z}) mittelwertfrei ist.

3. Verfahren nach Anspruch 1 oder 2, **dadurch gekennzeichnet, dass** der Zusatzfluss (ψ_{Z}) eine Dreiecksfunktion aufweist.

4. Verfahren nach Anspruch 1 oder 2, **dadurch gekennzeichnet, dass** der Zusatzfluss (ψ_{Z}) mindestens eine Sinusfunktion aufweist.

5. Verfahren nach einem der vorangegangenen Ansprüche, **dadurch gekennzeichnet, dass** ein maximaler Strom (iₘₐₓ) für die Elektromaschine (52) vorgegeben ist, wobei der durch die Zuordnungsvorschrift (5) ermittelte Strom (i) aus dem Drehmoment (T) und dem magnetischen Fluss (ψ) auf den maximalen Strom (iₘₐₓ) begrenzt ist.

6. Verfahren nach einem der vorangegangenen Ansprüche, **dadurch gekennzeichnet, dass** die Frequenz des periodischen Zusatzflusses (ψ_{Z}) größer 500 Hz ist.

7. Anordnung (1) zum Heizen einer Fahrzeugbatterie (51) eines Kraftfahrzeugs (50), wobei die Anordnung (1) einen Pulswechselrichter (2) mit einer Steuereinrichtung (3) aufweist, wobei der Pulswechselrichter (2) mit der Fahrzeugbatterie (51 und der Elektromaschine (52) verbunden ist, wobei der Steuereinrichtung (3) ein Drehmoment (T) und eine Drehzahl (n) der Elektromaschine (52) vorgegeben werden, wobei die Steuereinrichtung (3) derart ausgebildet ist, die Fahrzeugbatterie (51) während des Fahrbetriebs mittels eines Zusatzstromes zu heizen, ohne dass sich das Drehmoment (T) verändert, **dadurch gekennzeichnet, dass**
die Steuereinrichtung (3) derart ausgebildet ist, dass der Drehzahl (n) mittels einer Zuordnungsvorschrift (4) ein magnetischer Fluss (ψ) zugeordnet wird, wobei dem magnetischen Fluss (ψ) und dem Drehmoment (T) durch Zuordnungsvorschriften (5, 6) ein Strom (i) und ein Phasenwinkel (φ) zugeordnet werden, der durch den Pulswechselrichter (2) eingestellt wird, wobei dem magnetischen Fluss (ψ) ein periodischer Zusatzfluss (ψ_{Z}) aufgeprägt wird.

8. Anordnung nach Anspruch 7, **dadurch gekennzeichnet, dass** der periodische Zusatzfluss (ψ_{Z}) mittelwertfrei ist.

9. Anordnung nach Anspruch 7 oder 8, **dadurch gekennzeichnet, dass** der Zusatzfluss (ψ_{Z}) eine Dreiecksfunktion oder mindestens eine Sinusfunktion aufweist.

10. Anordnung nach einem der Ansprüche 7 bis 9, **dadurch gekennzeichnet, dass** die Frequenz des periodischen Zusatzflusses (ψ_{Z}) größer 500 Hz ist.
